# EUROPEAN PATENT APPLICATION

(11) **EP 1 369 461 A1**
(43) Date of publication of application: **10.12.2003**
(21) Application number: 03253284.8
(22) Date of filing: 24.05.2003
(51) Int. Cl.: C09D 7/12

(54) **Stabilized coating compositions containing isothiazolone**

(30) Priority: 06.06.2002 US 386593 P
(71) Applicant: ROHM AND HAAS COMPANY, Philadelphia, Pennsylvania 19106-2399 (US)
(72) Inventor: Ghosh, Tirthankar, Oreland, Pennsylvania 19075 (US)
(74) Representative: Kent, Venetia Katherine

(57) **Abstract**

High pH aqueous coating compositions containing 3-isothiazolone microbicide that have been stabilized against the degradation of the 3-isothiazolone by the addition of low levels of copper ion are disclosed. In particular, aqueous paint compositions containing pH-adjusting amine compounds, where the pH is above 9.5, are effectively stabilized when 1 to 200 ppm of copper ion is added to the paint composition before the 3-isothiazolone is combined with other paint components or if copper ion is added together with the 3-isothiazolone to the remaining paint components or if the 3-isothiazolone is added no more than 1 hour before copper ion is added to the composition.

## Description

### BACKGROUND

This invention relates to mildew resistant aqueous-based coating compositions comprising isothiazolone compounds. In particular, the invention provides stable compositions and prevents odor generation from coating compositions, particularly paints, containing isothiazolone microbicides where the aqueous composition has a pH greater than 9.5.

Isothiazolones are well known mildewcides for film forming compositions and are generally unstable without the addition of a stabilizer depending upon the particular isothiazolone and surrounding environment. In aqueous paint formulations, nitrate salts, including copper nitrate, are known stabilizers for isothiazolones (see US Patent Nos. 3,870,795 and 4,067,878).

The use of various copper and zinc salts as stabilizers for isothiazolones in paint compositions is disclosed in US Patent Nos. 5,073,582 and 5,208,272. Typically, copper salts are not required as stabilizers for isothiazolones when the paint compositions contain zinc oxide. For example, paint compositions containing 2-n-octyl-3-isothiazolone microbicide are recommended for use at pH values below 9.5 with an appropriate level of zinc oxide (see Rohm and Haas Technical Bulletin #81A104, July 1995, I:SkaneTM M-8 Mildewcide"). However, in certain paint compositions where the pH is greater than 9.5, the presence of zinc oxide may not be sufficient to maintain stability of the isothiazolone component and degradation of the isothiazolone may occur resulting in generation of undesirable odors in the dried paint film, especially under humid or warm temperature conditions.

The problem addressed by the present invention is to overcome the deficiencies of current coating formulations when formulated at pH values above 9.5, where the isothiazolone microbicide component is subject to degradation, even in the presence of zinc salts.

### STATEMENT OF INVENTION

The present invention provides an aqueous coating composition comprising (a) a film-forming polymeric coating composition selected from one or more of the group consisting of acrylic polymer, polyvinylacetate polymer, polyvinylchloride polymer and styrene-acrylic polymer; (b) a 3-isothiazolone compound as represented by formula **I:** 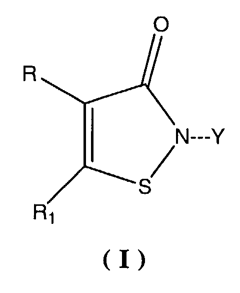 wherein:
Y is an unsubstituted or substituted (C₁-C₁₈)alkyl group, an unsubstituted or substituted (C₂-C₁₈)alkenyl or alkynyl group, an unsubstituted or substituted (C₆-C₁₂)cycloalkyl group, an unsubstituted or substituted (C₇-C₁₀)aralkyl group, or a substituted (C₇-C₁₀)aryl group;
R and R₁ are independently hydrogen, halogen or (C₁-C₄)alkyl groups; or
R and R₁ can be taken together with the C=C double bond of the isothiazolone ring to form an unsubstituted or substituted benzene ring;
(c) a pH-adjusting compound selected from one or more of ammonia and organic amines having a pKₐ greater than 9.0; (d) from 1 to 200 parts per million, based on weight of the composition, of copper ion; and (e) water; wherein the aqueous composition has a pH greater than 9.5.

In another embodiment the present invention provides a method for stabilizing an aqueous coating composition against degradation of a 3-isothiazolone compound contained therein, comprising adding 1 to 200 parts per million, based on weight of the aqueous coating composition, of copper ion to a mixture of (a) a film-forming polymeric coating composition selected from one or more of the group consisting of acrylic polymer, polyvinylacetate polymer, polyvinylchloride polymer and styrene-acrylic polymer; (b) a pH-adjusting compound selected from one or more of ammonia and organic amines having a pKₐ greater than 9.0; and (c) water; wherein pH of the coating composition is greater than 9.5; and wherein components (a), (b), (c) and the copper compound may be combined in any order provided that a 3-isothiazolone compound is further added at a point no more than 1 hour before addition of the copper compound.

In another aspect the present invention provides a method for stabilizing an aqueous coating composition against degradation of a 3-isothiazolone compound contained therein, comprising (a) combining 1 to 200 parts per million, based on weight of the aqueous coating composition, of a copper compound with a 3-isothiazolone compound to form a first mixture; and (b) adding the first mixture to a second mixture to form the aqueous coating composition, wherein the second mixture has a pH of greater than 9.5 and comprises (i) a film-forming polymeric coating composition selected from one or more of the group consisting of acrylic polymer, polyvinylacetate polymer, polyvinylchloride polymer and styrene-acrylic polymer; (ii) a pH-adjusting compound selected from one or more of ammonia and organic amines having a pKₐ greater than 9.0; and (iii) water.

### DETAILED DESCRIPTION

We have discovered that aqueous coating compositions, particularly paint formulations containing pH-adjusting amine compounds having pKₐ values above 9.0, where the pH is above 9.5, can be stabilized against degradation of 3-isothiazolone microbicidal components in the coating composition if 1 to 200 ppm of copper ion is added to the formulation before the 3-isothiazolone is combined with other paint components or if the copper compound is added together with the 3-isothiazolone component to the formulation or if the 3-isothiazolone is added no more than 1 hour before copper ion is added to the formulation.

As used herein, the following terms have the designated definitions, unless the context clearly indicates otherwise. The term "alkyl (meth)acrylate" refers to either the corresponding acrylate or methacrylate ester; similarly, the term "(meth)acrylic" refers to either acrylic or methacrylic acid and the corresponding derivatives, such as esters or amides. All percentages referred to will be expressed in weight percent (%), based on total weight of polymer or composition involved, unless specified otherwise. The term "copolymer" or "polymer" refers to polymer compositions containing units of two or more different monomers, unless otherwise specified (such as acrylic "homopolymer"). The following abbreviations are used herein: g = grams, ppm = parts per million. Unless otherwise specified, ranges listed are to be read as inclusive and combinable and temperatures are in degrees centigrade (°C).

3-Isothiazolones suitable for use as stabilizers in aqueous paint compositions include those as previously represented by formula **(I)**:

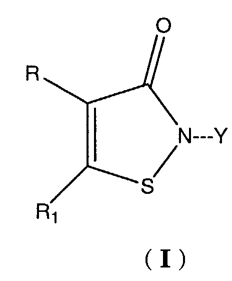

By a "substituted alkyl group" is meant an alkyl group having one or more of its hydrogens replaced by another substituent group; examples include hydroxyalkyl, haloalkyl and alkylamino. By a "substituted aralkyl group" is meant an aralkyl group having one or more of its hydrogens on either the aryl ring or the alkyl chain replaced by another substituent group; examples include halo, (C₁-C₄)alkyl, halo-(C₁-C₄)alkoxy and (C₁-C₄)alkoxy. By a "substituted aryl group" is meant an aryl group, such as phenyl, naphthyl or pyridyl groups, having one or more of its hydrogens on the aryl ring replaced by another substituent group; examples include halo, nitro, (C₁-C₄)alkyl, halo-(C₁-C₄)alkoxy and (C₁-C₄)alkoxy.

Suitable 3-isothiazolone compounds include, for example, 2-methyl-3-isothiazolone, 2-methyl-5-chloro-3-isothiazolone and other 2-(C₁-C₅)alkyl-3-isothiazolone derivatives. Preferably, the 3-isothiazolone compound is a 3-isothiazolone of formula **I**, where Y is an unsubstituted or substituted (C₆-C₁₈)alkyl group, or an unsubstituted or substituted (C₆-C₁₈)alkenyl or alkynyl group. Typically, the 3-isothiazolone is selected from 2-n-octyl-3-isothiazolone (**OIT**), 4,5-dichloro-2-n-octyl-3-isothiazolone (DCOIT), 4,5-dichloro-2-benzyl-3-isothiazolone, 2-cyclohexyl-3-isothiazolone, 2-benzyl-3-isothiazolone, 5-chloro-2-(2-(4-chlorophenyl)ethyl)-3-isothiazolone, 5-chloro-2-(2-phenylethyl)-3-isothiazolone, 5-chloro-2-(4'-chlorobenzyl)-3-isothiazolone and 2-haloalkoxyaryl-3-isothiazolones (such as 2-(4-trifluoromethoxyphenyl)-3-isothiazolone, 2-(4-trifluoromethoxyphenyl)-5-chloro-3-isothiazolone and 2-(4-trifluoromethoxyphenyl)-4,5-dichloro-3-isothiazolone). More preferably, the 3-isothiazolone is selected from one or more of the group consisting of 2-n-octyl-3-isothiazolone and 4,5-dichloro-2-n-octyl-3-isothiazolone. Use levels of the 3-isothiazolone microbicide in the coating compositions are typically from 0.02 to 0.2%, preferably from 0.04-0.13% and more preferably from 0.05 to 0.1%, based on total weight of the coating composition, such that the amount is effective to control the growth of microorganisms in the aqueous medium.

Suitable film-forming polymer compositions useful in formulating the coating compositions of the present invention include, for example, polymers selected from one or more of the group consisting of acrylic polymer, polyvinylacetate polymer, polyvinylchloride polymer and styrene-acrylic polymer. It is understood that the film forming polymers (also referred to as "binders") may be any of the conventional latex or emulsion polymers used in formulating aqueous-based coatings, such as paints. Typically, acrylic polymers would include copolymers based on alkyl (meth)acrylates (such as methyl methacrylate and butyl acrylate, for example), other (meth)acrylic derivatives (such as acrylic acid, methacrylic acid and methyl methacrylamide, for example) and optionally, vinylaromatic monomers (such as styrene and vinyltoluene). Similary, polyvinylacetate polymers would include copolymers based on vinyl acetate monomer and a range of other comonomers, such as the alkyl (meth)acrylates and vinylaromatic monomers. Polyvinylchloride polymers would include copolymers based on vinyl chloride monomer and a range of other comonomers, such as the alkyl (meth)acrylates, vinyl acetate and vinylaromatic monomers. In addition, the film-forming polymer compositions may be conventionally modified derivatives of the aforementioned polymers based on the inclusion of reactive additives, such as post-crosslinking agents, for example, epoxy compounds.

Use levels of the film-forming polymer compositions in the coating compositions are typically from 1 to 75% preferably from 5 to 70% and more preferably from 10 to 60%, based on total weight of the composition. Typically, the film-forming polymers may be either penetrating or non-penetrating with respect to the substrate surface upon which they are applied.

The copper compounds useful to provide copper ion in the aqueous coating compositions of the present invention include, for example, copper nitrate, copper sulfate, copper chloride, copper bromide, copper salts of organic carboxylic acids (such as copper acetate, copper citrate and copper propionate) and complexed or chelated copper salts (such as amine and aminocarboxylate complexes).

Representative amines suitable for use a copper chelants include, for example, polyamines such as ethylenediamine, diethylenetriamine, 1,2-propanediamine, 1,3-propanediamine, N,N-dimethylethylenediamine and N,N-diethylethylenediamine. Representative aminopolycarboxylates suitable as copper chelants or complexes include, for example, nitrilotriacetate (NTA), ethylenediaminetetraacetate (EDTA), N-hydroxyethylethylenediaminetriacetate, diethylenetriaminepentaacetate, ethylenediaminedisuccinate (EDDS), 2-hydroxypropylenediaminedisuccinate, ethylendiaminediglutarate, ethylenediaminetetrapropionate, triethylenetetraaminehexaacetate, ethanoldiglycine, propylenediaminetetraacetate and methylglycinediacetate.

Other suitable copper salts include copper alkanoate (mixture of (C₇-C₁₃)alkyl carboxylates) as well as copper hexanoate, copper heptanoate, copper decanoate, copper dodecanoate, copper dodecenoate, copper cyclohexylcarboxylate, copper tetrahydrobenzoate, copper naphthenate, copper 2-ethylhexanoate (also known as "octoate"), copper neodecanoate, copper oleate, copper benzoate, copper salts of disproportionated rosin acid, copper 2-phenylethanoate, copper dodecylbenzene sulfonate, copper dioctyl sulfosuccinate and copper petroleum sulfonate. Preferably the copper compound is selected from one or more of nitrate, chloride, acetate and organic acid carboxylate salts; more preferably the copper compound is copper nitrate.

Use levels of copper ion in the coating compositions are typically from 0.0001 to 0.02% (1 to 200 ppm), preferably from 0.0005-0.01% (5 to 100 ppm) more preferably from 0.001-0.005% (10 to 50 ppm) and most preferably from 0.0015 to 0.003% (15 to 30 ppm), based on total weight of the composition, such that the amount is effective to stabilize the 3-isothiazolone component against degradation. Levels of copper ion above about 100 ppm (0.01%) are generally undesirable due to the potential color contribution to the composition, thus interfering with subsequent use in some paint formulations.

Suitable pH-adjusting compounds useful in the coating compositions of the present invention include ammonia and organic amines having a pKₐ value greater than 9.0 (pK_{b} less than 5), typically from 9 to 11 and preferably from 9.2 to 10. Such organic amines include, for example, 2-amino-2-methyl-1-propanol (AMP), ethanolamine, diethanolamine, triethanolamine, monoisopropanolamine, triisopropanolamine, morpholine, 1-amino-2-propanol, 2-amino-2-methyl-1,3-propanediol and N,N-dimethyl-2-amino-2-methyl-1-propanol. Values of pKₐ indicate the strength of the amine in terms of basicity: pKₐ is the negative logarithm of the dissociation constant of the protonated amine in water; by definition, pKₐ + pK_{b} = 14 (stronger bases will have a smaller pK_{b} value, and consequently a larger pKₐ value) with the "a" and "b" subscripts referring to acidity and basicity, respectively.

Preferably, the pH-adjusting compound is selected from one or more of ammonia and 2-amino-2-methylpropanol. Use levels of the pH-adjusting compound in the coating compositions are typically from 0.02 to 1%, preferably from 0.05 to 0.5% and more preferably from 0.1 to 0.4%, based on total weight of the composition, as long as the amount is effective to provide the desired overall pH, that is, above 9.5. Typically the pH is from greater than 9.5 up to 12, preferably from 9.6 to 11 and more preferably from 9.7 to 10.5. Optionally, the pH may be further adjusted with inorganic base, such as KOH or NaOH, in addition to use of the pH-adjusting amine compounds required by the present invention.

Optionally, solvents may be used to dissolve the 3-isothiazolone and may be any organic solvent which is miscible with the 3-isothiazolone, is compatible with the proposed end use, does not destabilize the 3-isothiazolone, and does not react with the copper compound to eliminate its stabilizing action. Hydroxylic solvents, for example, polyols, such as glycols, monoethers of glycols and alcohols may be used. An hydroxylic coalescent, such as trimethyl-1,3-pentanediol monoisobutyrate also may be used. In certain formulations, hydrocarbons, either aliphatic or aromatic, are useful solvents. Typical solvents are ethylene glycol, propylene glycol, dipropylene glycol, dipropylene glycol monoethyl ether, xylene and mineral spirits. Solvents may be used in admixture as long as the copper salt remains soluble or is well dispersed enough so as to be added conveniently and uniformly to the test formulation.

Optionally, adjuvants may be included in the coating compositions of the present invention. For example, paint formulations, may contain the following optional ingredients: zinc compounds (such as zinc oxide and zinc salts of organic carboxylic acids, for example, zinc octoate), coalescents, pigments (such as inorganic pigments, organic pigments or dyes), dispersants, surface active agents and rheology modifiers or thickeners (such as hydroxyethyl cellulose and polyetherurethanes). When used, these adjuvants may be present at levels from 0.5 to 75%, based on total weight of the composition.

The 3-isothiazolone and copper compound may be separately blended into the coating composition to be stabilized as long as the copper compound is added to the formulation before addition of the 3-isothiazolone or within 1 hour of 3-isothiazolone contact with the other coating composition components. Typically the 3-isothiazolone compound is added to the formulation at a point after addition of the copper compound, preferably within 3 hours, more preferably within 1 hour, and most preferably within 30 minutes after addition of the copper compound.

Preferably, the 3-isothiazolone and the copper compound, with or without organic cosolvent, may be precombined into a single package or solution before being added to the coating composition to be stabilized. The single package combination of 3-isothiazolone, copper compound, and optional organic solvent offers the advantage of improved control of the ratio of 3-isothiazolone to copper compound being added to the coating composition, such as paint, since a single operation is involved rather than the several steps involved when each ingredient is added separately; in addition, the paint formulator will require only one storage vessel for single-package formulations, rather than the several which would be required if each component were to be supplied separately; also, a one-step operation is inherently simpler than the multistep process of adding each ingredient separately where the chance for spillage or error is increased.

Typically, coating compositions of the present invention comprise from 1 to 75 parts of the polymeric coating composition (a), from 0.02 to 0.2 parts of the 3-isothiazolone (b), from 0.02 to 1 parts of the pH-adjusting compound (c), from 0.0001 to 0.02 parts of copper ion (d), from 25 to 99 parts of water (e), and further comprise from zero up to 10 parts of a solvent selected from one or more of the group consisting of aliphatic hydrocarbons, aromatic hydrocarbons, dihydric alcohols and monoalkyl ethers of dihydric alcohols; wherein the parts of (a), (b) and (c) are expressed per 100 parts of total aqueous composition. In a preferred embodiment of the invention, the composition comprises from 0.05 to 0.1 parts of the 3-isothiazolone (b) and from 0.001 to 0.005 parts of copper ion (d).

While not wishing to be bound by theory, we believe that if the pH of the aqueous environment is somewhat higher than the pKₐ of the amine used as the pH-adjusting compound then the nucleophilicity of the amine will be very high compared to that in the same environment where the pH is somewhat lower than pKₐ of the amine; at the lower pH some portion of the amine will be in the protonated state, that is, much less nucleophilic. The greater the nucleophilicity of the amine, the greater the likelihood that ring-opening attack may occur on the 3-isothiazolone compounds, leading to degradation and generation of potentially odiferous sulfur byproducts. When the pH of the coating composition is below about 9.5, there is no destabilization or odor generation from the 3-isothiazolone, either in absence of copper compound stabilizer or in the presence of conventional zinc compounds. However, above a pH of about 9.5, even the presence of zinc compounds is not effective to prevent degradation of the 3-isothiazolone; surprisingly we have found that copper ion is effective at protecting the 3-isothiazolone compounds against degradation under these conditions. In addition, we have found that 2-n-octyl-3-isothiazolone is stable at pH values as high as 10 in the absence of amines (see **Example** 5). When amines are present the effect of pH alone is overshadowed by the effect of "nucleophilicity" in terms of potential degradation of the 3-isothiazolone.

Some embodiments of the invention are described in detail in the following Examples. All ratios, parts and percentages are expressed by weight unless otherwise specified, and all reagents used are of good commercial quality unless otherwise specified.

Abbreviations used in the Examples and Tables are listed below with the corresponding descriptions:

| | |
|---|---|
| OIT | = 2-n-Octyl-3-isothiazolone |
| AMP | = 2-Amino-2-methyl-1-propanol |
| NH₃ | = Ammonia |
| AA | = Acrylic acid |
| BA | = Butyl acrylate |
| MMA | = Methyl methacrylate |
| Acrylic | = 52/47/1 BA/MMA/AA emulsion polymer, 60% polymer solids |
| NA | = Not analyzed or not applicable |

### Example 1

Various simulated coating formulations were prepared as follows (used in **Examples 2-4**). For experiments described in **Example 2,** 3-isothiazolone microbicide in the form of approximately 0.3 g Skane^{TM} M-8 Mildewcide (45-47% 2-n-octyl-3-isothiazolone (**OIT**), 48-50% propylene glycol, 3-5% water) was added to a simulated paint formulation containing approximately 70 g film-forming polymer emulsion and 0.2-0.3 g pH-adjusting amine compound. For the experiments described in **Examples 3** and **4**, 3-isothiazolone microbicide in the form of approximately 0.2 g Skane^{TM} M-8 Mildewcide (45-47% 2-n-octyl-3-isothiazolone (**OIT**), 48-50% propylene glycol, 3-5% water) was added to a simulated paint formulation containing approximately 50 g film-forming polymer emulsion, 0.1-0.3 g pH-adjusting amine compounds, 0.0-0.11 g zinc octoate (18% aqueous solution) and 0.0-0.017 g copper nitrate (as Cu(NO₃)₂•1.5H₂O or 23% aqueous solution). The formulated samples were then placed in an oven at 60°C and aliquots were taken at various times for analysis of residual **OIT**. In all cases the initial concentration of **OIT** in the test samples was approximately 2000 ppm active ingredient. The pH-adjusting amine compounds were either AMP (2-amino-2-methylpropanol) or ammonia (added as 29% NH₄OH).

### Example 2

Table 1 summarizes the effect of pH on the stability of **OIT** in the simulated coating formulations in the absence of copper or zinc ions (none of the samples contained zinc octoate or copper salts). The pH of all samples was adjusted with 10% HC1 or 10% NaOH to lower or raise the pH, respectively. The pH of samples **2-A-1** and **2-B-1** had dropped to 9.6 after 3 days. At pH below 9.5 all formulations were stable with regard to **OIT** content (>90% retention after about 2 months); at pH above 9.5, **OIT** stability deteriorated rapidly within the first few days (<75% retention after 3 days).

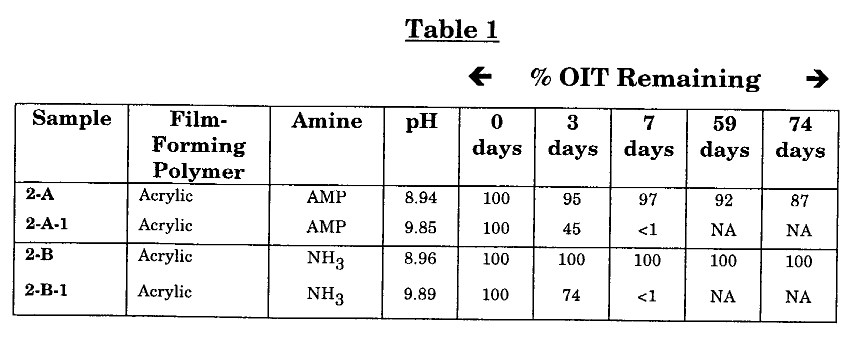

### Example 3

Table 2 summarizes the effect of zinc (as zinc octoate) or copper (as copper nitrate) ion on the stability of **OIT** in simulated coating formulations at high pH conditions (9.8-9.9). The pH of all samples was adjusted with 10% NaOH to achieve final desired pH. In formulations containing zinc ion (Zn²⁺ = 400 ppm) alone, **OIT** stability deteriorated rapidly within the first few days (<50% retention after 5 days), whereas when copper ion (Cu²+ = 50 ppm) was added to the formulation, **OIT** stability was greatly enhanced (>90% retention after 2 months), even at aggressive high pH conditions.

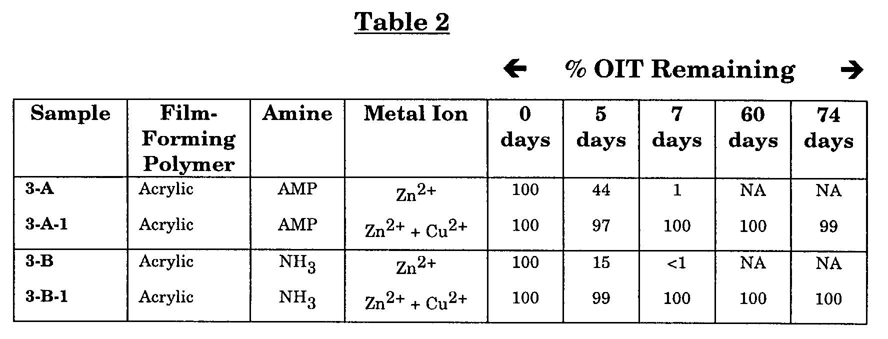

### Example 4

Table 3 summarizes the effect of:
(1) copper alone (Cu²⁺ = 50 ppm, in the absence of zinc octoate) and
(2) various levels of copper (Cu²⁺ = 10 or 30 ppm) in the presence of 400 ppm zinc ion,
on the stability of **OIT** in the simulated coating formulations at high pH conditions (9.9-10.0). The pH of all samples was adjusted with 10% NaOH to achieve final desired pH. In formulations containing copper ion alone (Cu²⁺ = 50 ppm), **OIT** stability was excellent; copper levels as low as 10 ppm were also effective when zinc ion was present, although zinc ion alone at these levels was shown to be an ineffective at stabilizing **OIT** (see Table 2, Samples **3-A** and **3-B**) at the high pH conditions.

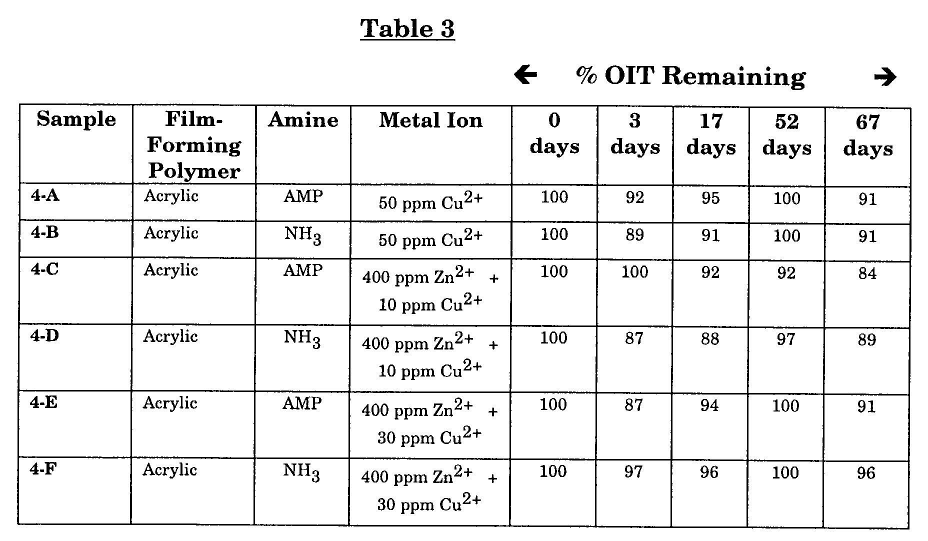

### Example 5

This example demonstrates the stability of 2-n-octyl-3-isothiazolone at high pH conditions in the absence of amine compounds having pKₐ above 9.0. A 2-n-octyl-3-isothiazolone solution (1%) was prepared in 95% propylene glycol/5% water and the pH was adjusted to 10.0-10.1 with NaOH; no metal salt stabilizers were added to the mixture. Samples of this mixture were then stored at ambient temperature (approximately 25°C) and also in an oven at 40°C. After 14 days, there was no loss of 2-n-octyl-3-isothiazolone active ingredient (100% retention) for samples stored at either 25°C or 40°C.

## Claims

1. An aqueous coating composition comprising:
(a) a film-forming polymeric coating composition selected from one or more of the group consisting of acrylic polymer, polyvinylacetate polymer, polyvinylchloride polymer and styrene-acrylic polymer;
(b) a 3-isothiazolone compound as represented by formula **I:** 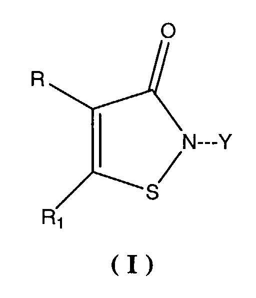 wherein:
Y is an unsubstituted or substituted (C₁-C₁₈)alkyl group, an unsubstituted or substituted (C₂-C₁₈)alkenyl or alkynyl group, an unsubstituted or substituted (C₆-C₁₂)cycloalkyl group, an unsubstituted or substituted (C₇-C₁₀)aralkyl group, or a substituted (C₇-C₁₀)aryl group;
R and R₁ are independently hydrogen, halogen or (C₁-C₄)alkyl groups; or
R and R₁ can be taken together with the C=C double bond of the isothiazolone ring to form an unsubstituted or substituted benzene ring;
(c) a pH-adjusting compound selected from one or more of ammonia and organic amines having a pKₐ greater than 9.0;
(d) from 1 to 200 parts per million, based on weight of the composition, of copper ion; and
(e) water;
wherein the aqueous composition has a pH greater than 9.5.

2. The composition of claim 1 wherein the copper ion is provided by a copper compound selected from one or more of nitrate, chloride, acetate and organic acid carboxylate salts.

3. The composition of claim 1 comprising from 1 to 75 parts of the polymeric coating composition (a), from 0.02 to 0.2 parts of the 3-isothiazolone (b), from 0.02 to 1 parts of the pH-adjusting compound (c), from 0.0001 to 0.02 parts of copper ion (d), from 25 to 99 parts of water (e), and further comprising from zero up to 10 parts of a solvent selected from one or more of the group consisting of aliphatic hydrocarbons, aromatic hydrocarbons, dihydric alcohols and monoalkyl ethers of dihydric alcohols; wherein the parts of (a), (b) and (c) are expressed per 100 parts of total aqueous composition.

4. The composition of claim 3 wherein the composition comprises from 0.05 to 0.1 parts of the 3-isothiazolone (b) and from 0.001 to 0.005 parts of copper ion (d).

5. The composition of claim 1 wherein the 3-isothiazolone is selected from one or more of the group consisting of 2-n-octyl-3-isothiazolone and 4,5-dichloro-2-n-octyl-3-isothiazolone.

6. A method for stabilizing an aqueous coating composition against degradation of a 3-isothiazolone compound contained therein, comprising adding 1 to 200 parts per million, based on weight of the aqueous coating composition, of copper ion to a mixture of:
(a) a film-forming polymeric coating composition selected from one or more of the group consisting of acrylic polymer, polyvinylacetate polymer, polyvinylchloride polymer and styrene-acrylic polymer;
(b) a pH-adjusting compound selected from one or more of ammonia and organic amines having a pKₐ greater than 9.0; and
(c) water;
wherein pH of the coating composition is greater than 9.5; and wherein components (a), (b), (c) and the copper compound may be combined in any order provided that a 3-isothiazolone compound is further added at a point no more than 1 hour before addition of the copper compound.

7. The method of claim 6 comprising adding 10 to 50 parts per million, based on weight of the aqueous coating composition, of copper ion to the mixture.

8. The method of claim 6 wherein the a 3-isothiazolone compound is added at a point after addition of the copper compound.

9. The method of claim 6 wherein the 3-isothiazolone compound is represented by formula **I:** 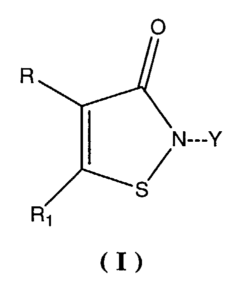 wherein:
Y is an unsubstituted or substituted (C₁-C₁₈)alkyl group, an unsubstituted or substituted (C₂-C₁₈)alkenyl or alkynyl group, an unsubstituted or substituted (C₆-C₁₂)cycloalkyl group, an unsubstituted or substituted (C₇-C₁₀)aralkyl group, or a substituted (C₇-C₁₀)aryl group;
R and R₁ are independently hydrogen, halogen or (C₁-C₄)alkyl groups; or
R and R₁ can be taken together with the C=C double bond of the isothiazolone ring to form an unsubstituted or substituted benzene ring.

10. A method for stabilizing an aqueous coating composition against degradation of a 3-isothiazolone compound contained therein, comprising:
(a) combining 1 to 200 parts per million, based on weight of the aqueous coating composition, of a copper compound with a 3-isothiazolone compound to form a first mixture; and
(b) adding the first mixture to a second mixture to form the aqueous coating composition, wherein the second mixture has a pH of greater than 9.5 and comprises:
(i) a film-forming polymeric coating composition selected from one or more of the group consisting of acrylic polymer, polyvinylacetate polymer, polyvinylchloride polymer and styrene-acrylic polymer;
(ii) a pH-adjusting compound selected from one or more of ammonia and organic amines having a pKₐ greater than 9.0; and
(iii) water.
